# EUROPÄISCHE PATENTSCHRIFT

(11) **EP 2 419 290 B1**
(45) Veröffentlichungstag und Bekanntmachung des Hinweises auf die Patenterteilung: **03.04.2013**
(21) Anmeldenummer: 11717230.4
(22) Anmeldetag: 21.04.2011
(51) Int. Cl.: B60J 7/00

(54) **FAHRZEUGROLLOANORDNUNG, BAUGRUPPE MIT EINER FAHRZEUGROLLOANORDNUNG, UND DACHANORDNUNG**
VEHICLE ROLLER BLIND ARRANGEMENT, ASSEMBLY HAVING A VEHICLE ROLLER BLIND ARRANGEMENT, AND ROOF ARRANGEMENT
SYSTÈME DE STORE POUR VÉHICULE, MODULE MUNI D'UN SYSTÈME DE STORE POUR VÉHICULE ET SYSTÈME DE TOIT

(30) Priorität: 26.04.2010 DE 102010018259
(43) Veröffentlichungstag der Anmeldung: 22.02.2012
(73) Patentinhaber: Webasto SE, 82131 Stockdorf (DE)
(72) Erfinder: ROCKELMANN, Andreas, 81249 München (DE); POLLAK, Martin, 82178 Puchheim (DE); HÖLZEL, Dominik, 82140 Olching (DE); STEINER, Erwin, 82362 Weilheim (DE); NOWACK, Tobias, 81377 München (DE); BRUGGAIER, Ulrike, 82041 Oberhaching (DE); SCHANDEL, Susanne, 81241 München (DE); FÄRBER, Manfred, 82407 Wielenbach (DE)
(74) Vertreter: Epping - Hermann - Fischer
(86) Internationale Anmeldenummer: PCT/EP2011/056439
(87) Internationale Veröffentlichungsnummer: WO 2011/134894

(56) Entgegenhaltungen:
- EP-A1- 1 953 018
- WO-A1-2010/022768
- WO-A1-2010/022769
- DE-A1-102004 028 882
- DE-A1-102006 062 542
- FR-A- 1 379 077
- US-A1- 2009 178 771

## Beschreibung

Die Erfindung betrifft eine Fahrzeugrolloanordnung, eine Baugruppe mit einer Fahrzeugrolloanordnung und eine Dachanordnung, wie sie in den Oberbegriffen der Ansprüche 1, 12 und 16 genannt sind.

Dokument US 2009/0178771 beschreibt eine Fahrzeugrolloanordnung gemäß dem Oberbegriff des Anspruchs 1.

Bei Fahrzeugrolloanordnungen nach dem Stand der Technik kann die Rollobahn zusammen mit einem Führungselement, das in dem Fahrzeug verschiebbar angeordnet ist, zu einem Rollowickel aufgewickelt werden, der in einem vorgegebenen Bereich in dem Fahrzeug angeordnet ist. Der Durchmesser des Rollowickels ist dabei insbesondere von der Dicke der Rollobahn abhängig. Der Durchmesser des Rollowickels kann bei einer entsprechenden Dicke der Rollobahn sehr groß sein. Zwischen der Rollobahn und Teilen des Fahrzeugs kann es zu einem Reibkontakt kommen. Die dabei auftretenden Reibungskräfte sind insbesondere stark von dem Material der Rollobahn abhängig sein, und können deshalb relativ groß sein. Damit können die Kräfte zur Betätigung der Fahrzeugrolloanordnung relativ groß werden.

Aufgabe der Erfindung ist es, eine Fahrzeugrolloanordnung der eingangs genannten Art, eine Baugruppe mit einer Fahrzeugrolloanordnung und eine Dachanordnung anzugeben, die einen einfachen Aufbau bei niedrigen Kosten ermöglichen, aber dennoch eine zuverlässige Bedienung der Fahrzeugrolloanordnung erlauben.

Diese Aufgabe wird gemäß eines ersten Aspekts der Erfindung durch eine Fahrzeugrolloanordnung der eingangs genannten Art gelöst, bei der das Bandelement einen T-förmigen oder Y-förmigen Querschnitt aufweist, aus einem anderen Material als die Rollobahn besteht und eine gegenüber der Rollobahn geringere Materialdicke aufweist.

Der Einsatz eines Bandelements hat den Vorteil, dass das Material des Bandelements unabhängig von dem Material der Rollobahn sein kann. Des Weiteren kann die Dicke des Bandelements unabhängig von der Dicke der Rollobahn sein. Damit ist der Durchmesser des Wickels aus dem Bandelement und dem Führungselement lediglich abhängig von der Auszugslänge des Rollos. Bei kleiner Dicke des Bandelements kann der Durchmesser des Wickels aus dem Bandelement und dem Führungselement klein gehalten werden.

In einer erfindungsgemäßen Ausführungsform weist das Bandelement einen T-förmigen oder Y-förmigen Querschnitt auf. Durch die T-förmige oder Y-förmige Ausbildung des.Bandelements kann dieses in einfacher Weise auf einer Ober- oder Unterseite der Rollobahn angeordnet und mit dieser verbunden werden, zum Beispiel durch Nähen.

In einer ersten Ausführungsalternative hat das Bandelement einen Y-förmigen Querschnitt und das Führungselement ist bandförmig ausgebildet mit einer ersten Seite und einer von der ersten Seite abgewandten zweiten Seite. Ein erster Abschnitt des Bandelements ist fest mit der ersten Seite des Führungselements gekoppelt und ein zweiter Abschnitt des Bandelements ist fest mit der zweiten Seite des Führungselements gekoppelt. Dies hat den Vorteil, dass ein sicherer Verbund zwischen dem Bandelement und dem Führungselement möglich ist. Des Weiteren ist eine besonders dünne Ausführung des ersten und des zweiten Abschnitt des Bandelements möglich, und damit können das Bandelement und das Führungselement zusammen eine sehr geringe Dicke aufweisen.

In einer zweiten Ausführungsalternative hat das Bandelement einen T-förmigen Querschnitt und das Führungselement ist bandförmig ausgebildet mit einer ersten Seite und einer von der ersten Seite abgewandten zweiten Seite. Ein erster Abschnitt des Bandelements und ein zweiter Abschnitt des Bandelements sind fest mit der ersten Seite des Führungselements gekoppelt. Dies hat den Vorteil, dass ein sicherer Verbund zwischen dem Bandelement und dem Führungselement möglich ist. Des Weiteren ist eine besonders dünne Ausführung des Bandelements und des Führungselements möglich. Damit ist ein besonders geringer Durchmesser des Wickels aus dem Bandelement und dem Führungselement möglich.

In einer vorteilhaft weitergebildeten Ausführungsform weist die erste Längsseite des Bandelements eine Lasche auf, und die Lasche ist entweder mit einer Oberseite oder einer Unterseite der Rollobahn fest gekoppelt. Dies hat den Vorteil, dass der Durchmesser des Wickels aus dem Bandelement und der Rollobahn bei kleiner Dicke des Bandelements klein gehalten werden kann. Das Bandelement kann mit der Rollobahn in einfacher Weise, zum Beispiel durch Nähen, verbunden werden.

In einer weiteren vorteilhaften Weiterbildung ist das Bandelement mit dem Führungselement durch eine Klebeverbindung gekoppelt. Dies hat den Vorteil, dass ein sehr einfacher und sicherer Verbund zwischen dem Bandelement und dem Führungselement möglich ist und auf eine Nahtverbindung zwischen dem Bandelement und dem Führungselement verzichtet werden kann.

Gemäß eines zweiten Aspekts der Erfindung umfasst eine Baugruppe eine Fahrzeugrolloanordnung gemäß des ersten Aspekts der Erfindung und eine fest mit dem Fahrzeug koppelbare, sich entlang der Ausziehrichtung erstreckende Führungsschiene. Die Führungsschiene weist mindestens einen Führungsabschnitt auf, mittels dem das Führungselement geführt ist, und das Führungselement weist eine dem mindestens einen Führungsabschnitt zugewandte Oberfläche auf, und ein Abschnitt des Bandelements ist zwischen dem mindestens einen Führungsabschnitt und dem Führungselement auf der dem mindestens einen Führungsabschnitt zugewandten Oberfläche des Führungselements angeordnet. Dies hat den Vorteil, dass das Bandelement und das Führungselement zusammen einstellbare Gleiteigenschaften gegenüber der Führungsschiene haben können. Es kann ausreichen, die Reibeigenschaften des Bandelements und des Führungselements einmal abzustimmen, so dass sie dann für alle Baugruppen mit Fahrzeugrolloanordnung identisch sein können.

In einer vorteilhaften Ausführungsform gemäß des zweiten Aspekts der Erfindung weist die Führungsschiene zwei voneinander lateral beabstandete Führungsabschnitte auf, die derart angeordnet sind, dass jeweils ein lateraler Abschnitt des Führungselements von einem der Führungsabschnitte geführt ist, und jeweils ein Abschnitt des Bandelements ist zwischen einem der Führungsabschnitte und einem der lateralen Abschnitte des Führungselements auf der dem Führungsabschnitt zugewandten Oberfläche des Führungselements angeordnet. Dies hat den Vorteil, dass geringe Betätigungskräfte an der Fahrzeugrolloanordnung möglich sind, da die Führungsschiene und das Führungselement zwei in einer Ebene liegende Kontaktbereiche haben. Es ist einfach möglich, ein Verkanten des Führungselements zu vermeiden. Des Weiteren ist eine sichere Führung bei einer lateralen Bewegung des Führungselements möglich.

Gemäß eines dritten Aspekts der Erfindung hat eine Fahrzeugrolloanordnung eine Rollobahn, die in einer Ausziehrichtung auf- oder abwickelbar ist, und ein Führungselement, das sich entlang der Ausziehrichtung erstreckt und in einer fest mit dem Fahrzeug koppelbaren Führungsschiene führbar ist, und das bandförmig mit einer ersten Seite und einer von der ersten Seite abgewandten zweiten Seite ausgebildet ist. Die Rollobahn ist mit genau einer der Seiten des Führungselements fest gekoppelt, und die andere der Seiten des Führungselements hat eine Gleitschicht, die einen Kunststoff und/oder einen Lack aufweist. Dies hat den Vorteil, dass gute Gleiteigenschaften des Verbunds aus Rollobahn und Führungselement möglich sind. Durch einseitiges Anbringen der Rollobahn ist eine Einsparung an Material für die Rollobahn möglich. Der Durchmesser des Wickels aus der Rollobahn und dem Führungselement kann klein gehalten werden. Damit ist ein Bauraumvorteil möglich. Das Führungselement kann einfach mit der Rollobahn verbunden werden, zum Beispiel durch Nähen.

Gemäß eines vierten Aspekts der Erfindung umfasst eine Baugruppe eine Fahrzeugrolloanordnung gemäß des dritten Aspekts der Erfindung und eine fest mit dem Fahrzeug koppelbare, sich entlang der Ausziehrichtung erstreckende Führungsschiene. Die Führungsschiene weist mindestens einen Führungsabschnitt auf, mittels dem das Führungselement geführt ist, und die Seite des Führungselements, die die Gleitschicht hat, ist dem mindestens einen Führungsabschnitt zugewandt. Dies hat den Vorteil, dass sehr gute Gleiteigenschaften zwischen der Führungsschiene und dem Führungselement möglich sind.

Gemäß eines fünften Aspekts der Erfindung hat eine Fahrzeugrolloanordnung, eine Rollobahn, die in einer Ausziehrichtung auf- oder abwickelbar ist, ein Führungselement, das sich entlang der Ausziehrichtung erstreckt und in einer fest mit dem Fahrzeug koppelbaren Führungsschiene führbar ist, und das bandförmig mit einer ersten Seite und einer von der ersten Seite abgewandten zweiten Seite ausgebildet ist. Die Rollobahn ist mit einer der Seiten des Führungselements in einem ersten Flächenabschnitt fest gekoppelt. Die eine der Seiten des Führungselements hat in einem zweiten Flächenabschnitt eine Gleitschicht, die einen Kunststoff und/oder einen Lack aufweist. Dies hat den Vorteil, dass gute Gleiteigenschaften des Verbunds aus Rollobahn und Führungselement möglich sind. Durch das einseitige Anbringen der Rollobahn ist eine Einsparung an Material für die Rollobahn möglich. Der Durchmesser des Wickels aus der Rollobahn und dem Führungselement kann klein gehalten werden. Damit ist ein Bauraumvorteil möglich. Das Führungselement kann einfach mit der Rollobahn verbunden werden, zum Beispiel durch Nähen.

Gemäß eines sechsten Aspekts der Erfindung umfasst eine Baugruppe eine Fahrzeugrolloanordnung gemäß des fünften Aspekts der Erfindung und eine fest mit dem Fahrzeug koppelbare, sich entlang der Ausziehrichtung erstreckende Führungsschiene, wobei die Führungsschiene zwei voneinander lateral beabstandete Führungsabschnitte aufweist, mittels denen das Führungselement geführt ist, und die Seite des Führungselements, mit der die Rollobahn in dem ersten Flächenabschnitt fest gekoppelt ist und die in dem zweiten Flächenabschnitt die Gleitschicht hat, den zwei voneinander lateral beabstandete Führungsabschnitten zugewandt ist. Dies hat den Vorteil, dass geringe Betätigungskräfte an der Fahrzeugrolloanordnung möglich sind, da die Führungsschiene und das Führungselement zwei im Wesentlichen in einer Ebene liegende Kontaktbereiche haben. Die beiden Kontaktbereiche können alternativ auch in zwei leicht gegeneinander versetzten Ebenen liegen, um so Dickenunterschiede zwischen der Rollobahn und der Gleitschicht auszugleichen. Ein Verkanten des Führungselements kann vermieden werden. Des Weiteren ist eine sichere Führung bei lateraler Bewegung des Führungselements möglich.

In einer weiteren vorteilhaften Ausführungsform der Fahrzeugrolloanordnung weist das Führungselement ein Metall auf. Dies hat den Vorteil, dass das Metall eine mechanisch stabile und dennoch elastische Ausführung des Führungselements ermöglicht. Das Führungselement kann auch vollständig aus einem Metall bestehen.

In einer weiteren vorteilhaften Ausführungsform der Fahrzeugrolloanordnung ist das Führungselement eine Rollfeder.

In einer weiteren vorteilhaften Ausführungsform der Fahrzeugrolloanordnung weist die Gleitschicht Polytetrafluorethylen auf. Dies hat den Vorteil, dass die Gleitschicht besonders gute Gleiteigenschaften hat. Die Gleitschicht kann auch vollständig aus Polytetrafluorethylen bestehen.

Gemäß eines siebten Aspekts der Erfindung weist eine Dachanordnung eine Dachöffnung, einen Dachöffnungsrahmen, der die Dachöffnung begrenzt, und eine Baugruppe gemäß des zweiten, vierten oder sechsten Aspekts der Erfindung auf. Die Baugruppe ist in der Dachöffnung angeordnet und mit dem Dachöffnungsrahmen mechanisch gekoppelt.

Weitere vorteilhafte Ausgestaltungen der Erfindung sind in den Unteransprüchen angegeben.

Die Erfindung wird nachfolgend anhand von Ausführungsbeispielen näher erläutert. Es zeigt:
- Figur 1: eine schematische Ansicht einer Dachanordnung eines Fahrzeugs,
- Figur 2: eine schematische Ansicht einer Baugruppe mit einer Fahrzeugrolloanordnung,
- Figur 3: eine schematische Ansicht einer weiteren Baugruppe mit einer Fahrzeugrolloanordnung,
- Figur 4: eine schematische Ansicht einer weiteren Baugruppe mit einer Fahrzeugrolloanordnung,
- Figur 5: eine schematische Ansicht einer weiteren Baugruppe mit einer Fahrzeugrolloanordnung,
- Figur 6: eine schematische Ansicht einer weiteren Baugruppe mit einer Fahrzeugrolloanordnung, und
- Figur 7: eine schematische Ansicht einer weiteren Baugruppe mit einer Fahrzeugrolloanordnung.

Elemente gleicher Konstruktion oder Funktion sind figurenübergreifend mit den gleichen Bezugszeichen gekennzeichnet.

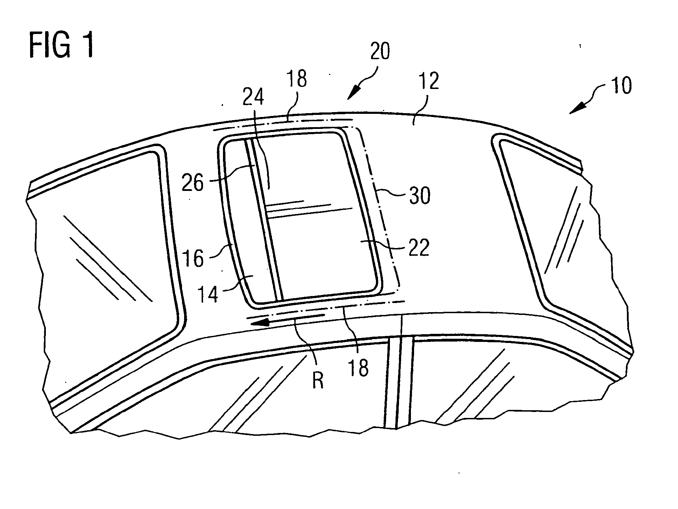

In Figur 1 ist ein Fahrzeug 10 dargestellt, mit einem Fahrzeugdach 12, das mit einer Dachöffnung 14 versehen ist, die mittels eines verschiebbaren Schiebedachdeckels wahlweise verschlossen oder zumindest teilweise freigebbar ist.

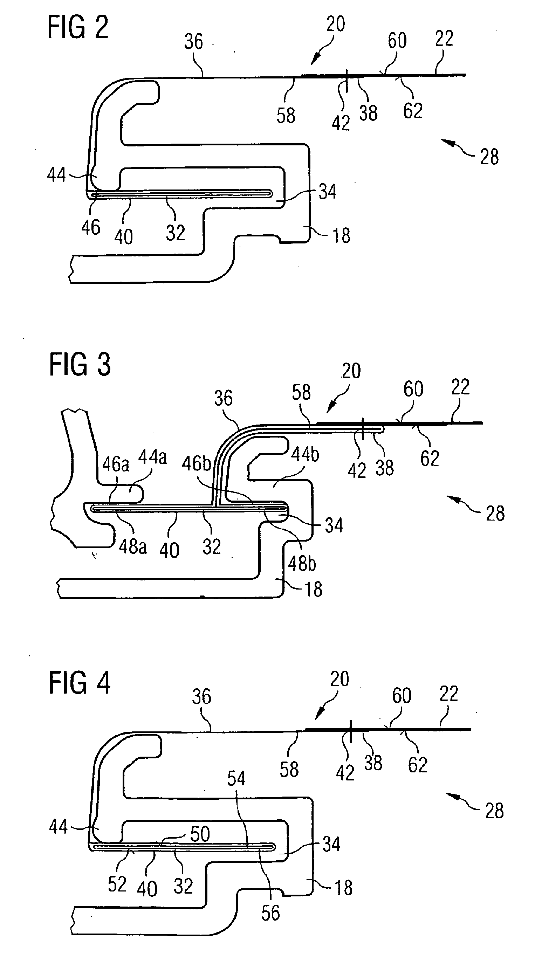

Die Dachöffnung 14 wird von einem am Fahrzeugdach 12 ausgebildeten Dachöffnungsrahmen 16 begrenzt. Der Dachöffnungsrahmen 16 hat vorzugsweise beidseitig angeordnete Führungsschienen 18, in denen unterhalb des verschiebbaren Schiebedachdeckels eine Fahrzeugrolloanordnung 20 angeordnet ist, die in den Figuren 2 bis 7 detailliert dargestellt ist. Als Material für die Führungsschienen 18 kommt insbesondere ein Metall, vorzugsweise Aluminium in Betracht. Alternativ kommt als Material für die Führungsschienen 18 ein Kunststoff in Betracht.

Die Fahrzeugrolloanordnung 20 weist mindestens eine Rollobahn 22 auf, die, bezogen auf das Fahrzeug 10, in einer Ausziehrichtung R nach vorne und entgegengesetzt der Ausziehrichtung R nach hinten verschoben werden kann. Ist die Rollobahn 22 vollständig nach hinten geschoben, so ist die Dachöffnung 14 vollständig freigegeben. Sonnenlicht und Umgebungsluft können dann ungehindert in den Fahrzeuginnenraum gelangen. Ist die Rollobahn 22 dagegen vollständig nach vorne geschoben, so ist die Dachöffnung 14 durch die Rollobahn 22 abgedeckt, so dass direktes Sonnenlicht und Umgebungsluft nur teilweise in den Fahrzeuginnenraum gelangen können. In weiteren Ausführungsformen weist die Fahrzeugrolloanordnung 20 zwei oder mehr Rollobahnen auf, die gleich- oder gegensinnig zum Freigeben oder Abdecken der Dachöffnung 14 bezüglich des Fahrzeugs nach vorne und hinten verschoben werden können.

An einem Ende der Rollobahn 22, das bezüglich der Fahrzeuglängsrichtung das hintere Ende der Rollobahn 22 ist, kann die Rollobahn 22 vollständig aufgewickelt sein, wie dies im Folgenden im Detail dargestellt ist. An einem weiteren Ende 24 der Rollobahn 22, das bezüglich der Fahrzeuglängsrichtung das vordere Ende der Rollobahn 22 ist, ist ein Zugspriegel 26 angeordnet, den der Fahrzeuginsasse insbesondere manuell betätigen kann, um so die Rollobahn 22 nach vorne oder nach hinten zu schiebern. In den seitlich der Dachöffnung 14 angeordneten Führungsschienen 18 sind die Längsränder der Rollobahn 22, also der rechte und der linke Rand der Rollobahn 22, angeordnet. Alternativ kann die Rollobahn auch durch eine elektrische Vorrichtung betätigt werden.

Die Führungsschienen 18 und die Fahrzeugrolloanordnung 20 bilden zusammen eine Baugruppe 28, die im Folgenden im Detail beschrieben wird.

In einem Bereich des hinteren Endes der Dachöffnung 14 ist eine Wickelvorrichtung 30 angeordnet, mittels der die Rollobahn 22 zu einem Rollowickel aufgewickelt werden kann.

Figur 2 zeigt eine Ausführungsform der Baugruppe 28 mit der Führungsschiene 18 und der Fahrzeugrolloanordnung 20. Die Fahrzeugrolloanordnung 20 umfasst ein Führungselement 32, das in einer Tasche 34 der Führungsschiene 18 angeordnet ist. Das Führungselement 32 erstreckt sich entlang der Ausziehrichtung R innerhalb der Führungsschiene 18 und ist in dieser führbar. Dabei verlaufenen die Ebene, in der sich das Führungselement 32 erstreckt, und die Ebene, in der sich die Rollobahn 22 erstreckt, im Wesentlichen parallel zueinander.

Die Fahrzeugrolloanordnung 20 umfasst weiter ein Bandelement 36, das sich gleichfalls entlang der Ausziehrichtung R erstreckt. Das Bandelement 36 ist vorzugsweise ein textiles Bandelement. Das Bandelement 36 ist zwischen der Rollobahn 22 und dem Führungselement 32 angeordnet. Das Bandelement 36 hat eine erste Längsseite 38 und eine zweite Längsseite 40. Die erste Längsseite 38 ist fest mit der Rollobahn 22 gekoppelt. Vorzugsweise ist das Bandelement 36 mit einer Nahtverbindung 42 mit der Rollobahn 22 verbunden. An der zweiten Längsseite 40 ist das Bandelement 36 schlauchförmig ausgebildet. In einem Hohlraum des schlauchförmigen Bandelements 36 ist das Führungselement 32 angeordnet. Vorzugsweise ist das Bandelement 36 mittels einer Klebeverbindung mit dem Führungselement 32 gekoppelt. Vorzugsweise wird das Bandelement 36 zusammen mit dem Führungselement 32 in einem gemeinsamen Extrusionsprozess hergestellt.

Da die Dicke des Bandelements 36 unabhängig von der Dicke der Rollobahn 22 gewählt werden kann, ist der Durchmesser eines Wickels des Bandelements 36 und des Führungselements 32 unabhängig von der Dicke der Rollobahn 22 und lediglich abhängig von der Auszugslänge der Rollobahn 22. Ist das Bandelement 36 mit einer kleinen Dicke ausgebildet, so kann der Wickeldurchmesser aus dem Bandelement 36 und dem Führungselement 32 sehr klein gehalten werden.

Die Führungsschiene 18 hat einen Führungsabschnitt 44, mit dem das Führungselement 32 geführt werden kann. Zwischen dem Führungsabschnitt 44 und dem Führungselement 32 ist ein Abschnitt 46 des Bandelements 36 angeordnet. Das Bandelement 36 und das Führungselement 32 können so gewählt werden, dass die Gleiteigenschaften dieser beiden Elemente 32, 36 gegenüber der Führungsschiene 18 lediglich einmal festgelegt werden müssen, und sich nicht mehr ändern, auch wenn ein anderes Material für die Rollobahn 22 verwendet wird.

In der in Figur 3 dargestellten Ausführungsform der Baugruppe 28 hat die Führungsschiene 18 zwei voneinander lateral beabstandete Führungsabschnitte 44a, 44b. Das Führungselement 32 hat zwei laterale Abschnitte 48a, 48b, die jeweils von einem der Führungsabschnitte 44a, 44b geführt werden. Zwischen einem der Führungsabschnitte 44a, 44b und einem der lateralen Abschnitte 48a, 48b des Führungselements 32 ist jeweils ein Abschnitt 46a, 46b des Bandelements 36 angeordnet. Da die Führungsabschnitte 44a, 44b der Führungsschiene 18 in einer Ebene liegen, können die Betätigungskräfte an der Fahrzeugrolloanordnung 20 klein gehalten werden. Die Abschnitte 48a, 48b des Führungselements 32 können über die entsprechenden Abschnitte 46a, 46b des Bandelements 36 gut an den Führungsabschnitten 44a, 44b der Führungsschiene 18 anliegen, so dass ein Verkanten des Führungselements 32 in der Tasche 34 der Führungsschiene 18 vermieden werden kann. Insgesamt ist so eine sichere Führung des Führungselements 32 in der Tasche 34 auch bei lateraler Bewegung des Führungselements 32 möglich. Des Weiteren weist ein derartiger Verbund aus dem Bandelement 36 und dem Führungselement 34 eine hohe Elastizität auf.

In einer weiteren in Figur 4 gezeigten Ausführungsform der Baugruppe 28 hat das Bandelement 34 einen Y-förmigen Querschnitt. Das Führungselement 32 ist bandförmig mit einer ersten Seite 50 und einer zweiten Seite 52 ausgebildet. Die zweite Seite 52 ist von der ersten Seite 50 abgewandt. Ein erster Abschnitt 54 des Bandelements 36 ist fest mit der ersten Seite 50 des Führungselements 32 gekoppelt. Ein zweiter Abschnitt 56 des Bandelements 36 ist fest mit der zweiten Seite 52 des Führungselements 32 gekoppelt. Vorzugsweise erfolgt die Kopplung der Abschnitte 54, 56 des Bandelements 36 am Führungselement 32 mittels Klebeverbindungen. Damit ist ein sicherer Verbund zwischen dem Bandelement 36 und dem Führungselement 32 gegeben. Des Weiteren kann eine besonders dünne Ausbildung des ersten und des zweiten Abschnitts 54, 56 des Bandelements 36 erreicht werden, was wiederum zu einem kleinen Wickeldurchmesser des Verbunds aus dem Führungselement 32 und dem Bandelement 36 führen kann. Vorzugsweise wird das Bandelement 36 zusammen mit dem Führungselement 32 in einem gemeinsamen Extrusionsprozess hergestellt. Auch in diesem Ausführungsbeispiel verlaufenen die Ebene, in der sich das Führungselement 32 erstreckt, und die Ebene, in der sich die Rollobahn 22 erstreckt, im Wesentlichen parallel zueinander.

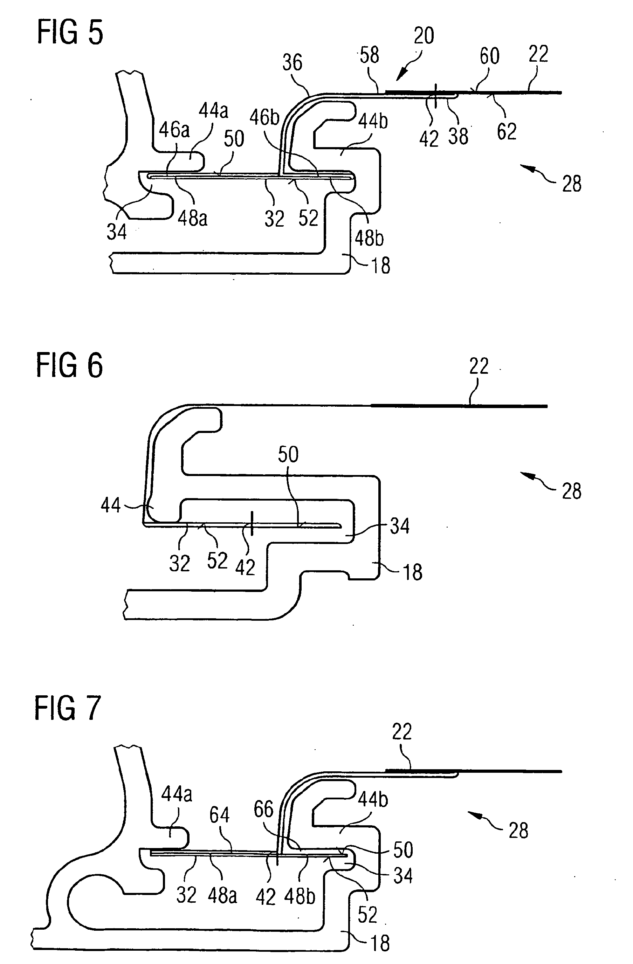

In einer weiteren in Figur 5 gezeigten Ausführungsform der Baugruppe 28 ist das Bandelement 36 T-förmig mit den beiden Abschnitten 54, 56 ausgebildet. Das Führungselement 32 ist bandförmig mit der ersten Seite 50 und der zweiten Seite 52 ausgebildet. Der erste Abschnitt 54 des Bandelements 36 und der zweite Abschnitt 56 des Bandelements 36 sind fest mit der ersten Seite 50 des Führungselements 32 gekoppelt. Vorzugsweise erfolgt die Kopplung zwischen dem Bandelement 36 und dem Führungselement 32 mittels einer Klebeverbindung, so dass ein sicherer Verbund zwischen dem Bandelement 36 und dem Führungselement 32 möglich ist. Ein derartiger Verbund aus dem Bandelement 36 und dem Führungselement 34 weist eine hohe Elastizität auf. Da das Bandelement 36 nur einseitig an dem Führungselement 32 angeordnet ist, ist eine besonders dünne Ausführung des Verbunds aus dem Bandelement 36 und dem Führungselement 32 möglich. Damit ist ein besonders geringer Durchmesser des Winkels aus dem Bandelement 36 und dem Führungselement 32 möglich. Da die lateralen Abschnitte 48a, 48b des Führungselements 32 jeweils von einem der lateral voneinander beabstandeten Führungsabschnitte 44a, 44b der Führungsschiene 18 geführt werden, ist eine besonders gute Führung des Führungselements 32 an der Führungsschiene 18 möglich. Ein Verkanten des Führungselements 32 in der Tasche 34 der Führungsschiene 18 kann so besonders gut verhindert werden. Des Weiteren ist eine sichere Führung des Führungselements 32 in der Tasche 34 bei lateraler Bewegung des Führungselements 32 möglich. Durch die beiden lateral voneinander beabstandeten Führungsabschnitte 44a, 44b der Führungsschiene 18 kann eine kurze Baulänge der Baugruppe 28 quer zur Fahrzeuglängsrichtung erreicht werden. Insgesamt ist damit ein Bauraumvorteil sowohl bezüglich der Breite als auch des Durchmessers der Baugruppe 28 gegeben. Auch in diesem Ausführungsbeispiel verlaufenen die Ebene, in der sich das Führungselement 32 erstreckt, und die Ebene, in der sich die Rollobahn 22 erstreckt, im Wesentlichen parallel zueinander.

In den in den Figuren 2 bis 5 gezeigten Ausführungsformen der Baugruppe 28 weist die erste Längsseite 38 des Bandelements 36 jeweils eine Lasche 58 auf. Die Rollobahn 22 hat eine Oberseite 60 und eine Unterseite 62. Die Lasche 58 ist an der Unterseite 62 der Rollobahn 22 angeordnet und mit dieser fest gekoppelt. In alternativen Ausführungsformen kann die Lasche 58 auch mit der Oberseite 60 der Rollobahn 22 fest gekoppelt sein. Durch die Anbindung der Lasche 58 entweder an die Oberseite 60 oder an die Unterseite 62 kann der Durchmesser des Wickels aus dem Bandelement 36 und der Rollobahn 22 klein gehalten werden. Des Weiteren kann das Bandelement 36 in einfacher Weise mit der Rollobahn 22 verbunden werden, beispielsweise durch die Nahtverbindung 42.

In der in Figur 6 gezeigten weiteren Ausführungsform der Baugruppe 28 ist die Rollobahn 22 direkt mit der zweiten Seite 52 des Führungselements 32 gekoppelt. Die erste Seite 50 des Führungselements 32 hat eine Gleitschicht. Die Gleitschicht weist einen Kunststoff und/oder einen Lack auf, wobei die Gleitschicht auch vollständig aus einem Kunststoff und/oder einem Lack bestehen kann. Vorzugsweise weist die Gleitschicht Polytetrafluorethylen auf, wobei die Gleitschicht auch vollständig aus Polytetrafluorethylen bestehen kann. Damit sind besonders gute Gleiteigenschaften des Verbunds aus der Rollobahn 22 und dem Führungselement 32 möglich. Durch das einseitige Anbringen der Rollobahn 22 an dem Führungselement 32 kann Material für die Rollobahn 22 eingespart werden. Der Durchmesser des Wickels aus der Rollobahn 22 und dem Führungselement 32 kann aufgrund der einseitigen Anordnung der Rollobahn 22 an dem Führungselement 32 klein gehalten werden. Damit ist ein erheblicher Bauraumvorteil möglich. Das Führungselement 32 kann in einfacher Weise mit der Rollobahn 22 verbunden werden, zum Beispiel durch die Nahtverbindung 42. Der Führungsabschnitt 44 ermöglicht eine Führung des Führungselements 32. Die erste Seite 50 des Führungselements 32, die dem Führungsabschnitt 44 der Führungsschiene 18 zugewandet und die mit der Gleitschicht versehen ist, ermöglicht sehr gute Gleiteigenschaften zwischen der Führungsschiene 18 und dem Führungselement 32. Auch in diesem Ausführungsbeispiel verlaufenen die Ebene, in der sich das Führungselement 32 erstreckt, und die Ebene, in der sich die Rollobahn 22 erstreckt, im Wesentlichen parallel zueinander.

In der in Figur 7 gezeigten weiteren Ausführungsform der Baugruppe 28 ist die Rollobahn 22 in einem ersten Flächenabschnitt 64 mit der ersten Seite 50 des Führungselements 32 gekoppelt. Die erste Seite 50 des Führungselements 32 hat in einem zweiten Flächenabschnitt 66 eine Gleitschicht. Die Gleitschicht weist einen Kunststoff und/oder einen Lack auf, wobei die Gleitschicht auch vollständig aus einem Kunststoff und/oder einem Lack bestehen kann. Vorzugsweise weist die Gleitschicht Polytetrafluorethylen auf, wobei die Gleitschicht auch vollständig aus Polytetrafluorethylen bestehen kann. Die erste Seite 50 des Führungselements 32, mit der die Rollobahn 22 in dem ersten Flächenabschnitt 64 fest gekoppelt ist und die in dem zweiten Flächenabschnitt 66 die Gleitschicht hat, ist den zwei voneinander lateral beabstandeten Führungsabschnitten 44a, 44b der Führungsschiene 18 zugewandt. Damit ist es möglich, dass die Gleitreibung zwischen dem Verbund aus der Rollobahn 22 und dem Führungselement 32 sehr gering ist. Damit können geringe Betätigungskräfte an der Fahrzeugrolloanordnung 20 erreicht werden, da die Führungsschiene 18 und das Führungselement 32 zwei in einer Ebene liegende Kontaktbereiche aufweisen können beziehungsweise alternativ auch in zwei leicht gegeneinander versetzten Ebenen liegen können, um so Dickenunterschiede zwischen der Rollobahn 22 und der Gleitschicht auszugleichen. Damit kann ein Verkanten des Führungselements 32 in der Tasche 34 der Führungsschiene 18 vermieden werden, und ein sicheres Führen des Führungselements 32 ist möglich. Durch einseitiges Anbringen der Rollobahn 22 an dem Führungselement 32 kann Material für die Rollobahn 22 eingespart werden. Des Weiteren kann der Durchmesser des Wickels aus der Rollobahn 22 und dem Führungselement 32 klein gehalten werden. Durch die beiden lateral voneinander beabstandeten Führungsabschnitte 44a, 44b der Führungsschiene 18 kann eine kurze Baulänge der Baugruppe 28 quer zur Fahrzeuglängsrichtung erreicht werden. Insgesamt ist damit ein Bauraumvorteil sowohl bezüglich der Breite als des Durchmessers der Baugruppe 28 gegeben. Das Führungselement 32 ist in einfacher Weise durch die Nahtverbindung 42 mit der Rollobahn 22 verbunden. Auch in diesem Ausführungsbeispiel verlaufenen die Ebene, in der sich das Führungselement 32 erstreckt, und die Ebene, in der sich die Rollobahn 22 erstreckt, im Wesentlichen parallel zueinander.

Die dargestellten Ausführungsformen der Baugruppe 28 aus der Fahrzeugrolloanordnung 20 und der Führungsschiene 18 ermöglichen, dass die Führungsschiene 18 aus einem Metall bestehen kann. Da der Verbund aus dem Bandelement 36 und dem Führungselement 34 beziehungsweise der Rollobahn 22 und dem Führungselement 34 eine hohe Elastizität aufweisen können, kann auf den Einsatz eines Kunststoffs für die Führungsschiene 18 verzichtet werden.

Bei allen beschriebenen Ausführungsformen der Erfindung kommt insbesondere die Anordnung der Fahrzeugrolloanordnung in einem öffnungsfähigen Fahrzeugdach in Frage. Die erfindungsgemäße Fahrzeugrolloanordnung kann auch für Öffnungen in Türen oder im Front-, Seiten- oder Heckbereich von Fahrzeugen angewendet werden. Die Rollobahnen müssen nicht notwendigerweise dem Sonnenschutz dienen. So können beispielsweise auch Mückenschutzgitter vorteilhaft durch die beschriebene Anordnung betätigt werden.

Die Erfindung ist nicht auf die angegebenen Ausführungsbeispiele beschränkt. Es ist insbesondere möglich, die Merkmale der verschiedenen Ausführungsbeispiele miteinander zu kombinieren, so dass such derartige Anordnungen von der Erfindung umfasst sind.

## Patentansprüche

1. Fahrzeugrolloanordnung (20), mit
- einer Rollobahn (22), die in einer Ausziehrichtung (R) auf- oder abwickelbar ist,
- einem bandförmigen Führungselement (32), das sich entlang der Ausziehrichtung (R) erstreckt und in einer fest mit einem Fahrzeug koppelbaren Führungsschiene (18) derart führbar ist, dass es sich parallel zur Rollobahn (22) erstreckt, und
- einem Bandelement (36), das sich entlang der Ausziehrichtung (R) erstreckt und zwischen der Rollobahn (22) und dem Führungselement (32) angeordnet ist, und an einer ersten Längsseite (38) fest mit der Rollobahn (22) gekoppelt ist und an einer zweiten Längsseite (40) fest mit dem Führungselement (32) gekoppelt ist, wobei das Bandelement (36) einen T-förmigen oder Y-förmigen Querschnitt aufweist, **dadurch gekennzeichnet, dass** das Bandelement (36) aus einem anderen Material als die Rollobahn (22) besteht und eine gegenüber der Rollobahn geringere Materialdicke aufweist.

2. Fahrzeugrolloanordnung (20) nach Anspruch 1, **dadurch gekennzeichnet, dass** das Bandelement (36) einen Y-förmigen Querschnitt hat, dass das Führungselement (32) bandförmig mit einer ersten Seite (50) und einer von der ersten Seite abgewandten zweiten Seite (52) ausgebildet ist, und ein erster Abschnitt (54) des Bandelements (36) fest mit der ersten Seite (50) des Führungselements (32) gekoppelt ist und ein zweiter Abschnitt (56) des Bandelements (36) fest mit der zweiten Seite (52) des Führungselements (32) gekoppelt ist.

3. Fahrzeugrolloanordnung (20) nach einem der Ansprüche 1 oder 2, **dadurch gekennzeichnet, dass** die Rollobahn mit einer der Seiten (50, 52) des Führungselements (32) in einem ersten Flächenabschnitt (64) fest gekoppelt ist, und die eine der Seiten (50, 52) des Führungselements (32) in einem zweiten Flächenabschnitt (66) eine Gleitschicht hat, die einen Kunststoff und/oder einen Lack aufweist.

4. Fahrzeugrolloanordnung (20) nach Anspruch 1, **dadurch gekennzeichnet, dass** das Bandelement (36) einen T-förmigen Querschnitt hat, dass das Führungselement (32) bandförmig mit einer ersten Seite (50) und einer von der ersten Seite (50) abgewandten zweiten Seite (52) ausgebildet ist, und ein erster Abschnitt (46a) des Bandelements (36) und ein zweiter Abschnitt (46b) des Bandelements (36) fest mit der ersten Seite (50) des Führungselements (32) gekoppelt sind.

5. Fahrzeugrolloanordnung (20) nach Anspruch 4, **dadurch gekennzeichnet, dass** die Rollobahn mit genau einer der Seiten (50, 52) des Führungselements (32) mittels eines Bandelements (36) fest gekoppelt ist, und die andere der Seiten (50, 52) des Führungselements (32) eine Gleitschicht hat, die einen Kunststoff und/oder einen Lack aufweist.

6. Fahrzeugrolloanordnung (20) nach einem der vorhergehenden Ansprüche, **dadurch gekennzeichnet, dass** das Bandelement (36) mit dem Führungselement (32) durch eine Klebeverbindung gekoppelt ist.

7. Fahrzeugrolloanordnung (20) nach einem der vorhergehenden Ansprüche, **dadurch gekennzeichnet, dass** das Bandelement (36) ein textiles Bandelement ist.

8. Fahrzeugrolloanordnung (20) nach einem der vorhergehenden Ansprüche, **dadurch gekennzeichnet, dass** die erste Längsseite (38) des Bandelements (36) eine Lasche (58) aufweist, und die Lasche (58) entweder mit einer Oberseite (60) oder einer Unterseite (62) der Rollobahn (22) fest gekoppelt ist.

9. Fahrzeugrolloanordnung (20) nach einem der Ansprüche 1 bis 8, **dadurch gekennzeichnet, dass** das Führungselement (32) ein Metall aufweist.

10. Fahrzeugrolloanordnung (20) nach einem der Ansprüche 1 bis 8, **dadurch gekennzeichnet, dass** das Führungselement (32) eine Rollfeder ist.

11. Fahrzeugrolloanordnung (20) nach einem der Ansprüche 3 oder 5, **dadurch gekennzeichnet, dass** die Gleitschicht Polytetrafluorethylen aufweist.

12. Baugruppe umfassend eine Fahrzeugrolloanordnung (20) nach einem der Ansprüche 1 bis 11 und eine fest mit dem Fahrzeug (10) koppelbare, sich entlang der Ausziehrichtung (R) erstreckende Führungsschiene (18), wobei die Führungsschiene (18) mindestens einen Führungsabschnitt (44, 44a, 44b) aufweist, mittels dem das Führungselement (32) geführt ist, und das Führungselement (32) eine dem mindestens einen Führungsabschnitt (44, 44a, 44b) zugewandte Oberfläche aufweist, und ein Abschnitt (46a, 46b) des Bandelements (36) zwischen dem mindestens einen Führungsabschnitt (44, 44a, 44b) und dem Führungselement (32) auf der dem mindestens einen Führungsabschnitt (44, 44a, 44b) zugewandten Oberfläche des Führungselements (32) angeordnet ist.

13. Baugruppe nach Anspruch 12, **dadurch gekennzeichnet, dass** die Führungsschiene (18) zwei voneinander lateral beabstandete Führungsabschnitte (44a, 44b) aufweist, die derart angeordnet sind, dass jeweils ein lateraler Abschnitt (48a, 48b) des Führungselements (32) von einem der Führungsabschnitte (44a, 44b) geführt ist, und jeweils ein Abschnitt (46a, 46b) des Bandelements (36) zwischen einem der Führungsabschnitte (44a, 44b) und einem der lateralen Abschnitte (48a, 48b) des Führungselements (32) auf der dem Führungsabschnitt (44a, 44b) zugewandten Oberfläche des Führungselements (32) angeordnet ist.

14. Baugruppe umfassend eine Fahrzeugrolloanordnung (20) nach Anspruch 3 oder 5 und eine fest mit einem Fahrzeug koppelbaren, sich entlang der Ausziehrichtung (R) erstreckende Führungsschiene (18), wobei die Führungsschiene (18) mindestens einen Führungsabschnitt (44, 44a, 44b) aufweist, mittels dem das Führungselement (32) geführt ist, und die Seite (50, 52) des Führungselements (32), die die Gleitschicht hat, dem mindestens einen Führungsabschnitt (44, 44a, 44b) zugewandt ist.

15. Baugruppe nach Anspruch 12, **dadurch gekennzeichnet, dass** die Fahrzeugrolloanordnung (20) nach Anspruch 11 ausgestaltet ist und die Führungsschiene (18) zwei voneinander lateral beabstandete Führungsabschnitte (44a, 44b) aufweist, mittels denen das Führungselement (32) geführt ist, und die Seite (50, 52) des Führungselements (32), mit der die Rollobahn (22) in dem ersten Flächenabschnitt (64) fest gekoppelt ist und die in dem zweiten Flächenabschnitt (66) die Gleitschicht hat, den zwei voneinander lateral beabstandete Führungsabschnitten (44a, 44b) zugewandt ist.

16. Dachanordnung mit
- einer Dachöffnung (14)
- einem Dachöffnungsrahmen (16), der die Dachöffnung (14) begrenzt, und
- einer Baugruppe (20) nach einem der Ansprüche 12 bis 15, wobei die Baugruppe (20) in der Dachöffnung (14) angeordnet und mit dem Dachöffnungsrahmen (16) mechanisch gekoppelt ist.

## Claims

1. A vehicle roller blind arrangement (20), with
- a roller blind web (22) which can be wound or unwound in an extension direction (R),
- a band-shaped guide element (32) which extends along the extension direction (R) and is guidable in a guide rail (18), which can be coupled fixedly to a vehicle, in such a manner that said guide element extends parallel to the roller blind web (22), and
- a band element (36) which extends along the extension direction (R) and is arranged between the roller blind web (22) and the guide element (32) and, on a first longitudinal side (38), is coupled fixedly to the roller blind (22) and, on a second longitudinal side (40), is coupled fixedly to the guide element (32), wherein the band element (36) has a T-shaped or Y-shaped cross section, **characterized in that** the band element (36) is composed of a different material from the roller blind web (22) and has a smaller material thickness than the roller blind web.

2. The vehicle roller blind arrangement (20) according to Claim 1, **characterized in that** the band element (36) has a Y-shaped cross section, **in that** the guide element (32) is designed in a band-shaped manner with a first side (50) and a second side (52) which faces away from the first side, and a first section (54) of the band element (36) is coupled fixedly to the first side (50) of the guide element (32) and a second section (56) of the band element (36) is coupled fixedly to the second side (52) of the guide element (32).

3. The roller blind arrangement (20) according to either of Claims 1 and 2, **characterized in that** the roller blind web is coupled fixedly to one of the sides (50, 52) of the guide element (32) in a first surface section (64), and said one of the sides (50, 52) of the guide element (32) has, in a second surface section (66), a sliding layer which contains a plastic and/or a varnish.

4. The vehicle roller blind arrangement (20) according to Claim 1, **characterized in that** the band element (36) has a T-shaped cross section, **in that** the guide element (32) is designed in a band-shaped manner with a first side (50) and a second side (52) facing away from the first side (50), and a first section (46a) of the band element (36) and a second section (46b) of the band element (36) are coupled fixedly to the first side (50) of the guide element (32).

5. The vehicle roller blind arrangement (20) according to Claim 4, **characterized in that** the roller blind web is coupled fixedly to just one of the sides (50, 52) of the guide element (32) by means of a band element (36), and the other of the sides (50, 52) of the guide element (32) has a sliding layer which contains a plastic and/or a varnish.

6. The vehicle roller blind arrangement (20) according to one of the preceding claims, **characterized in that** the band element (36) is coupled to the guide element (32) by means of an adhesive connection.

7. The vehicle roller blind arrangement (20) according to one of the preceding claims, **characterized in that** the band element (36) is a textile band element.

8. The vehicle roller blind arrangement (20) according to one of the preceding claims, **characterized in that** the first longitudinal side (38) of the band element (36) has a tab (58), and the tab (58) is coupled fixedly either to an upper side (60) or a lower side (62) of the roller blind web (22).

9. The vehicle roller blind arrangement (20) according to one of Claims 1 to 8, **characterized in that** the guide element (32) contains a metal.

10. The roller blind arrangement (20) according to one of Claims 1 to 8, **characterized in that** the guide element (32) is a scroll spring.

11. The vehicle roller blind arrangement (20) according to either of Claims 3 and 5, **characterized in that** the sliding layer contains polytetrafluoroethylene.

12. A subassembly comprising a vehicle roller blind arrangement (20) according to one of Claims 1 to 11 and a guide rail (18) which can be coupled fixedly to the vehicle (10) and extends along the extension direction (R), wherein the guide rail (18) has at least one guide section (44, 44a, 44b) by means of which the guide element (32) is guided, and the guide element (32) has a surface facing the at least one guide section (44, 44a, 44b), and a section (46a, 46b) of the band element (36) is arranged between the at least one guide section (44, 44a, 44b) and the guide element (32) on that surface of the guide element (32) which faces the at least one guide section (44, 44a, 44b).

13. The subassembly according to Claim 12, **characterized in that** the guide rail (18) has two guide sections (44a, 44b) which are spaced apart laterally from each other and are arranged in such a manner that each lateral section (48a, 48b) of the guide element (32) is respectively guided by one of the guide sections (44a, 44b), and each section (46a, 46b) of the band element (36) is arranged between one of the guide sections (44a, 44b) and one of the lateral sections (48a, 48b) of the guide element (32) on that surface of the guide element (32) which faces the guide section (44a, 44b).

14. A subassembly comprising a vehicle roller blind arrangement (20) according to Claim 3 or 5 and a guide rail (18) which can be coupled fixedly to a vehicle and extends along the extension direction (R), wherein the guide rail (18) has at least one guide section (44, 44a, 44b) by means of which the guide element (32) is guided, and that side (50, 52) of the guide element (32) which has the sliding layer faces the at least one guide section (44, 44a, 44b).

15. The subassembly according to Claim 12, **characterized in that** the vehicle roller blind arrangement (20) is configured according to claim 11, and the guide rail (18) has two laterally spaced-apart guide sections (44a, 44b) by means of which the guide element (32) is guided, and that side (50, 52) of the guide element (32) to which the roller blind web (22) is coupled fixedly in the first surface section (64) and which has the sliding layer in the second surface section (66) faces the two laterally spaced-apart guide sections (44a, 44b).

16. A roof arrangement with
- a roof opening (14),
- a roof opening frame (16) which bounds the roof opening (14), and
- a subassembly (20) according to one of Claims 12 to 15, wherein the subassembly (20) is arranged in the roof opening (14) and is coupled mechanically to the roof opening frame (16) .

## Revendications

1. Système de store pour véhicule (20), avec
- une bande de store (22), qui peut être enroulée et déroulée dans une direction d'extraction (R),
- un élément de guidage en forme de bande (32), qui s'étend le long de la direction d'extraction (R) et qui peut être guidé dans un rail de guidage (18) pouvant être couplé fixement au véhicule, de telle manière qu'il s'étende parallèlement à la bande de store (22), et
- un élément de bande (36), qui s'étend le long de la direction d'extraction (R) et qui est disposé entre la bande de store (22) et l'élément de guidage (32), qui est couplé fixement par un premier côté longitudinal (38) à la bande de store (22) et qui est couplé fixement par un deuxième côté longitudinal (40) à l'élément de guidage (32), dans lequel l'élément de bande (36) présente une section transversale en forme de T ou en forme de Y,
**caractérisé en ce que** l'élément de bande (36) se compose d'une autre matière que la bande de store (22) et présente une plus faible épaisseur de matière que la bande de store.

2. Système de store pour véhicule (20) selon la revendication 1, **caractérisé en ce que** l'élément de bande (36) présente une section transversale en forme de Y, **en ce que** l'élément de guidage (32) est réalisé en forme de bande avec un premier côté (50) et un deuxième côté (52) situé à l'opposé au premier côté, et une première partie (54) de l'élément de bande (36) est couplée fixement au premier côté (50) de l'élément de guidage (32) et une deuxième partie (56) de l'élément de bande (36) est couplée fixement au deuxième côté (52) de l'élément de guidage (32).

3. Système de store pour véhicule (20) selon l'une des revendications 1 ou 2, **caractérisé en ce que** la bande de store est couplée fixement à un des côtés (50, 52) de l'élément de guidage (32) dans une première partie de surface (64) et ledit un des côtés (50, 52) de l'élément de guidage (32) comporte dans une deuxième partie de surface (66) une couche de glissement, qui présente une matière plastique et/ou une laque.

4. Système de store pour véhicule (20) selon la revendication 1, **caractérisé en ce que** l'élément de bande (36) présente une section transversale en forme de T, **en ce que** l'élément de guidage (32) est réalisé en forme de bande avec un premier côté (50) et un deuxième côté (52) situé à l'opposé du premier côté (50), et une première partie (46a) de l'élément de bande (36) et une deuxième partie (46b) de l'élément de bande (36) sont couplées fixement au premier côté (50) de l'élément de guidage (32).

5. Système de store pour véhicule (20) selon la revendication 4, **caractérisé en ce que** la bande de store est justement couplée fixement à un des côtés (50, 52) de l'élément de guidage (32) au moyen d'un élément de bande (36), et l'autre des côtés (50, 52) de l'élément de guidage (32) comporte une couche de glissement, qui présente une matière plastique et/ou une laque.

6. Système de store pour véhicule (20) selon l'une des revendications précédentes, **caractérisé en ce que** l'élément de bande (36) est couplé à l'élément de guidage (32) au moyen d'un assemblage collé.

7. Système de store pour véhicule (20) selon l'une des revendications précédentes, **caractérisé en ce que** l'élément de bande (36) est un élément de bande textile.

8. Système de store pour véhicule (20) selon l'une des revendications précédentes, **caractérisé en ce que** le premier côté longitudinal (38) de l'élément de bande (36) présente une patte (58), et la patte (58) est couplée fixement soit à un côté supérieur (60) soit à un côté inférieur (62) de la bande de store (22).

9. Système de store pour véhicule (20) selon l'une des revendications 1 à 8, **caractérisé en ce que** l'élément de guidage (32) présente un métal.

10. Système de store pour véhicule (20) selon l'une des revendications 1 à 8, **caractérisé en ce que** l'élément de guidage (32) est un ressort à crosse.

11. Système de store pour véhicule (20) selon l'une des revendications 3 ou 5, **caractérisé en ce que** la couche de glissement présente du polytétrafluoroéthylène.

12. Module comprenant un système de store pour véhicule (20) selon l'une des revendications 1 à 11 et un rail de guidage (18) pouvant être couplé fixement au véhicule (10) et s'étendant le long de la direction d'extraction (R), dans lequel le rail de guidage (18) présente au moins une partie de guidage (44, 44a, 44b), au moyen de laquelle l'élément de guidage (32) est guidé, et l'élément de guidage (32) présente une surface tournée vers ladite au moins une partie de guidage (44, 44a, 44b), et une partie (46a, 46b) de l'élément de bande (36) est disposée entre ladite au moins une partie de guidage (44, 44a, 44b) et l'élément de guidage (32) sur la surface de l'élément de guidage (32) tournée vers ladite au moins une partie de guidage (44, 44a, 44b).

13. Module selon la revendication 12, **caractérisé en ce que** le rail de guidage (18) présente deux parties de guidage (44a, 44b) espacées latéralement l'une de l'autre, qui sont disposées de telle manière qu'une partie latérale (48a, 48b) de l'élément de guidage (32) soit chaque fois guidée par une des parties de guidage (44a, 44b), et une partie (46a, 46b) de l'élément de bande (36) est chaque fois disposée entre une des parties de guidage (44a, 44b)-et une des parties latérales (48a, 48b) de l'élément de guidage (32) sur la surface de l'élément de guidage (32) tournée vers la partie de guidage (44a, 44b).

14. Module comprenant un système de store pour véhicule (20) selon la revendication 3 ou 5 et un rail de guidage (18) pouvant être couplé fixement à un véhicule et s'étendant le long de la direction d'extraction (R), dans lequel le rail de guidage (18) présente au moins une partie de guidage (44, 44a, 44b), au moyen de laquelle l'élément de guidage (32) est guidé, et le côté (50, 52) de l'élément de guidage (32), qui est muni de la couche de glissement, est tourné vers ladite au moins une partie de guidage (44, 44a, 44b).

15. Module selon la revendication 12, **caractérisé en ce que** le système de store pour véhicule (20) est configuré selon la revendication 11 et le rail de guidage (18) présente deux parties de guidage espacées latéralement l'une de l'autre (44a, 44b), au moyen desquelles l'élément de guidage (32) est guidé, et le côté (50, 52) de l'élément de guidage (32), auquel la bande de store (22) est couplée fixement dans la première partie de surface (64) et qui est munie de la couche de glissement dans la deuxième partie de surface (66), est tourné vers les deux parties de guidage (44a, 44b) espacées latéralement l'une de l'autre.

16. Système de toit avec
- une ouverture de toit (14),
- un encadrement d'ouverture de toit (16), qui limite l'ouverture de toit (14), et
- un module (20) selon l'une des revendications 12 à 15, dans lequel le module (20) est disposé dans l'ouverture de toit (14) et est couplé mécaniquement à l'encadrement d'ouverture de toit (16).
